# EUROPÄISCHE PATENTSCHRIFT

(11) **EP 0 420 997 B1**
(45) Veröffentlichungstag und Bekanntmachung des Hinweises auf die Patenterteilung: **04.05.1994**
(21) Anmeldenummer: 89118087.9
(22) Anmeldetag: 29.09.1989
(51) Int. Cl.: H02M 3/335

(54) **Schaltungsanordnung für ein Sperrwandler-Schaltnetzteil**
Circuit arrangement for a flyback switching power supply
Disposition de circuit pour alimentation à découpage du type à récupération

(43) Veröffentlichungstag der Anmeldung: 10.04.1991
(73) Patentinhaber: SIEMENS AKTIENGESELLSCHAFT, 80333 München (DE)
(72) Erfinder: Feldtkeller, Martin, Dipl.-Ing., D-8000 München 80 (DE)

(56) Entgegenhaltungen:
- EP-A- 0 144 754
- FR-A- 2 293 738

## Beschreibung

Die Erfindung bezieht sich auf eine Schaltungsanordnung für ein Sperrwandler-Schaltnetzteil, mit folgenden Merkmalen:
1) das Schaltnetzteil enthält
   a) einen magnetisierbaren Transformator, der eine im Kreis einer Gleichspannungsquelle in Reihe mit einem elektrischen Schalter liegende Primärwicklung und eine über eine Gleichrichtereinrichtung mit einer Last verbundene Sekundärwicklung enthält;
   b) im Betrieb des Schaltnetzteils wird der Transformator in einer ersten Phase (Flußphase), in der der Schalter eingeschaltet ist, aufmagnetisiert und in einer zweiten Phase (Sperrphase), in der der Schalter ausgeschaltet ist, abmagnetisiert;
2) die Schaltungsanordnung enthält
   a) einer Entmagnetisierungs-Überwachungseinrichtung mit einem Nulldurchgangsdetektor, die von einer Transformatorwicklung eine Spannung (Rückkopplungsspannung) abnimmt und das Einschalten des ausgeschalteten Schalters erst dann zuläßt, wenn die Rückkopplungsspannung während der Sperrphase von Werten mit einer ersten Polarität auf einen bestimmten Schwellwert abgefallen ist.

Sperrwandler finden vielfältige Anwendungen auf dem Gebiet der Unterhaltungs- und Industrieelektronik und sind in unterschiedlichen Ausführungen bekannt; vgl. hierzu beispielsweise das von Joachim Wüstehube herausgegebene Lehrbuch "Schaltnetzteile", Expert-Verlag, Grafenau, 1979, insbesondere Kapitel 3.3.

Ein Sperrwandler enthält gemäß der Europäischen Offenlegungsschrift EP 0144 754 einen Transformator, dessen Primärwicklung über einen elektrischen Schalter an eine Gleichspannung, etwa eine gleichgerichtete und geglättete Netzspannung, angeschlossen ist und dessen Sekundärkreis eine ebenfalls gleichgerichtete, geglättete Spannung entnommen wird. In einer ersten Phase, der Flußphase, ist der Schalter leitend. Im Primärkreis fließt dann Strom, wobei der Transformator elektrische Energie aufnimmt und magnetisch speichert. In der zweiten Arbeitsphase, der Sperrphase, sperrt der Schalter den primärseitigen Stromfluß, mit der Folge, daß die Spannungen am Transformator ihre Polarität wechseln, im Sekundärkreis Strom fließt und der Transformator die magnetisch gespeicherte Energie an den Verbraucher abgibt.

Ein neuer Arbeitszyklus sollte erst dann beginnen, wenn der Transformator vollständig entmagnetisiert ist, und zwar im wesentlichen aus zwei Gründen. Wird die Flußphase eingeleitet, bevor der Transformator seine magnetische Energie vollständig abgegeben hat, so kann er nach mehreren Zyklen bis in die Sättigung getrieben werden. In diesem Zustand hat der Übertrager nur noch eine minimale Induktivität; dann fließt ein hoher Primärstrom, der u.U. den Schalter, beispielsweise einen SIPMOS-Transistor, zerstört. Darüberhinaus ist eine restlose Entmagnetisierung auch deshalb anzustreben, weil man dann die zum Ansteuern des Schalttransistors erforderliche Information über den Primärstrom ohne Verwendung eines Fühlwiderstandes im Emitterkreis des Schalttransistors gewinnen kann.

Zur Überwachung der Trafo-Entmagnetisierung bietet es sich an, die Spannung an einer geeigneten Transformatorwicklung, beispielsweise der mit einer der Sekundärwicklungen fest gekoppelten Regelwicklung, in der Sperrphase zu messen. Wenn nämlich der Transformator seine gespeicherte Energie vollständig abgegeben hat, wechselt die Meßspannung ihre Polarität. Man braucht dann nur noch den Nulldurchgang zu detektieren und dafür zu sorgen, daß der Schalttransistor erst nach Freigabe durch den Nulldurchgangsdetektor wieder leitend gemacht wird.

Die geschilderte Überwachungstechnik ist nicht vollkommen störungsfrei. Aufgrund parasitärer Elemente im Transformator schwingt die Meßspannung zu Beginn der Sperrphase nach. Bei sekundärseitigem Kurzschluß kann dieses "Nachklingeln" zu Polaritätswechseln führen, ohne daß der Transformator bereits abmagnetisiert ist. Damit der Schalttransistor bei diesen schwingungsbedingten Nulldurchgängen nicht anspricht, legt man die Ansteuerlogik so aus, daß die Information des Nulldurchgangsdetektors während einer bestimmten Zeit nach Beginn der Sperrphase ignoriert wird. Eine solche Klingelausblendung läßt sich zwar relativ einfach realisieren; sie erfaßt aber noch nicht alle Störquellen. Man kann nämlich nicht ausschließen, daß auf der Ausgangsseite ein plötzlicher Kurzschluß mit induktiven und kapazitiven Anteilen auftritt. Bei einem solchen Kurzschluß bricht die Ausgangsspannung auf einen kleinen Wert zusammen, wobei sie zunächst mit kleiner Amplitude um den Nullpunkt schwingt. Erfolgt nun der Kurzschluß erst nach dem ausgeblendeten Zeitraum, so lösen die dadurch hervorgerufenen Nulldurchgänge vorzeitige Startimpulse für den Schalttransistor aus. Die Folgen wären wohl tolerierbar, wenn man den Transformator mit relativ großer Reserve zur Sättigung ausführt; ein solches Bauteil wäre allerding voluminös und teuer. Man könnte auch daran denken, die Kurzschlußschwingungen im Ausgangskreis durch eine antiparallel zum Glättungskondensator geschaltete Diode zu verhindern. Billige Dioden können allerdings nicht allzu große Ströme vertragen, so daß diese Maßnahme auf Schaltnetzteile kleiner Leistung beschränkt ist.

Der Erfindung liegt die Aufgabe zugrunde, die eingangs geschilderte Schaltungsanordnung so weiterzuentwickeln, daß die Entmagnetisierung des Transformators störungssicher und ohne besonderen Schaltungsaufwand überwacht werden kann. Die Schaltung soll dabei so gestaltet sein, daß das Schaltnetzteil eine kompakte Bauform haben kann und nicht auf kleine Ausgangsleistungen beschränkt ist.

Diese Aufgabe wird erfindungsgemäß dadurch gelöst, daß
die Entmagnetisierungs-Überwachungseinrichtung Schaltmittel enthält, die dem Schwellwert einen zeitabhängigen Verlauf geben, wobei
der Schwellwert nach Inbetriebnahme des Schaltnetzteils zunächst vom Wert Null oder von einem Wert der ersten Polarität ausgeht und dann zu Werten mit einer zweiten Polarität verschoben wird, mit der Maßgabe, daß die Verschiebung nicht vor dem Zeitpunkt einsetzt, zu dem unter Nennlast die an der Last abfallende Spannung (Lastspannung) anzusteigen beginnt.

Eine erfindungsgemäße Schaltungsanordnung ignoriert alle in der Praxis vorkommenden Nulldurchgänge der Rückkopplungsspannung, die nicht durch den Energieabfluß im Transformator hervorgerufen werden. Sie erreicht dies nicht etwa durch Einführung von Totzeiten für den Nulldurchgangsdetektor, sondern dadurch, daß die Schaltschwelle gegenüber dem Wert O verschoben wird. Die Verschiebung muß dabei so groß sein, daß der Schwellwert einerseits von Klingel- und Kurzschluß-bedingten Spannungsschwankungen nicht erreicht wird, andererseits aber von den negativen Spannungsspitzen nach der Entmagnetisierung überschritten wird. Diese Spannungsspitzen sind von der momentanen Ausgangsspannung des Schaltnetzteils abhängig. Die Schwellwertverschiebung muß deshalb bei Inbetriebnahme des Netzteils von Null (oder einem sehr kleinen Wert der ersten Polarität) ausgehen und sich am Aufbau der Ausgangsspannung während des Anschwingvorganges orientieren.

Die erfindungsgemäß vorgesehene Schwellwertverschiebung läßt sich schaltungstechnisch besonders einfach dadurch realisieren, daß man auf einen Nulldurchgangsdetektor eine Summenspannung führt. Diese Spannung besteht aus der auch schon bisher verwendeten Rückkopplungsspannung und einer Korrekturspannung, die zeitlich den gleichen Verlauf wie die Schwellwertverschiebung hat, allerdings mit umgekehrten Vorzeichen.

Die Korrekturspannung könnte beispielsweise ein der Ausgangsspannung proportionales Signal sein. Die Überlagerung beider Signale kann dann dadurch erfolgen, daß man die beiden Signalleitungen an passender Stelle über einen geeignet dimensionierten ohmschen Widerstand miteinander verbindet. Diese Alternative empfiehlt sich vor allem deshalb, weil sie sich mit herkömmlichen Ansteuer-IC's realisieren läßt; man muß lediglich in der Außenbeschaltung ein weiteres Bauelement einfügen.

Vielfach enthält der Ansteuerbaustein eine Anlaufschaltung, bei der eine nach Inbetriebnahme des Gerätes erzeugte Rampenspannung die Ansteuerimpulse des Schalttransistors allmählich aufsteuert. In diesem Fall bietet es sich an, die Korrekturspannung über die Rampenspannung - ggf. mit einer gewissen zeitlichen Verzögerung - zu beziehen. Diese Alternative hat den Vorzug, daß die Korrekturspannung unabhängig von der ausgangsseitigen Spannung ist, so daß ein Anschwingversuch bei Vorliegen eines ausgangsseitigen Kurzschlusses sofort abgebrochen wird.

Weitere vorteilhafte Ausgestaltungen und Weiterbildungen der Erfindung sind Gegenstand zusätzlicher Ansprüche.

Die Erfindung soll nun anhand zweier Ausführungsbeispiele unter Bezugnahme auf die Figuren der beigefügten Zeichnung näher erläutert werden. Es zeigen:
- FIG 1: die Schaltungsanordnung eines ersten Ausführungsbeispieles, in einer stark vereinfachten Darstellung;
- FIG 2: den zeitlichen Verlauf der Spannung U₁₃, die an der Regelwicklung des Transformators aus FIG 1 anliegt, im Nennbetrieb;
- FIG 3: in der gleichen Darstellungsweise wie bei FIG 2 die Spannung U₁₃ im Kurzschlußbetrieb;
- FIG 4: in gleicher Darstellungsweise wie in FIG 2 die Spannung bei einem plötzlichen Kurzschluß im Ausgangskreis; und
- FIG 5: das Schaltbild eines zweiten Ausführungsbeispiels der Erfindung, in einer stark vereinfachten Darstellungsweise.

In den Figuren sind einander entsprechende Teile mit gleichen Bezugszeichen versehen.

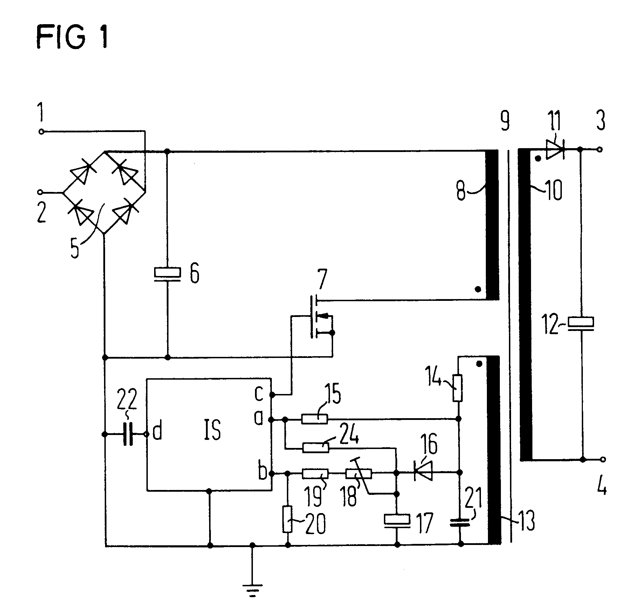

FIG 1 zeigt die Schaltung eines freischwingenden Sperrwandler-Schaltnetzteils, das aus einer zwischen den Klemmen 1 und 2 anliegenden Netzspannung an den Klemmen 3 und 4 eine stabilisierte Gleichspannung erzeugt. Hierzu wird zunächst die Netzspannung in einem Gleichrichter 5 gleichgerichtet, in einem Ladekondensator 6 geglättet und über einen elektrischen Schalter, im vorliegenden Fall einen SIPMOS-Transistor 7, auf eine erste Primärwicklung (Speisewicklung 8) eines Transformators 9 geführt. Während der Leitphase des Transistors 7 wird Energie magnetisch im Transformator 9 gespeichert. In der Sperrphase wird diese Energie über eine Sekundärwicklung 10 des Transformators 9 an einen zwischen den Klemmen 3 und 4 liegenden, nicht dargestellten Verbraucher abgegeben. Die am Verbraucher abfallende Spannung ist über eine Diode 11 und einen weiteren Ladekondensator 12 gleichgerichtet und gesiebt.

Zur impulsbreitenmodulierten Ansteuerung des Transistors enthält die Schaltung einen Ansteuerbaustein IS, im vorliegenden Beispiel den kommerziell erhältlichen Baustein TDA 4605.

Der Ansteuerbaustein und seine äußere Beschaltung sind in der Siemens-Produktinformation "IC's für die Unterhaltungselektronik", Ausgabe 8.87, S. 46 bis 63 ausführlich erläutert. Deshalb wird die Schaltungsanordnung im folgenden nur insoweit dargestellt und beschrieben, als dies für ein Verständnis der Erfindung erforderlich ist.

Zum Einschalten des Transistors erhält der Baustein IS am Pin a ein erstes Spannungssignal (Rückkopplungsspannung). Dieses Signal wird aus einer zweiten, mit der Sekundärwicklung fest verkoppelten Wicklung (Regelwicklung 13) über die Widerstände 14 und 15 zugeführt. Zur Bestimmung der Impulsbreite erhält der Baustein IS aus der Regelwicklung am Anschluß b ein Regelsignal, das über eine Diode 16 und einen Ladekondensator 17 zunächst gleichgerichtet und geglättet und anschließend in einem aus den Widerständen 18, 19 und 20 gebildeten Spannungsteiler heruntergeteilt wird. Um eine Spitzengleichrichtung hochfrequenter Anteile zu vermeiden, ist der Widerstand 14 mit einem weiteren Kondensator 21 zu einem Tiefpaßfilter ergänzt. Durch Vergleich der Regelspannung mit einer internen Referenzspannung wird die Breite des an Pin c abgegebenen Ausgangsimpulses der Last der Sekundärseite angepaßt. Damit das Schaltnetzteil nach Inbetriebnahme weich anläuft, sorgt ein weiterer, mit Pin d des Ansteuerbausteins verbundener Kondensator 22, der beim Einschalten des Geräts eine Rampenspannung erzeugt, für ein allmähliches Ansteigen der Impulsdauer. Auf diese Weise wird vermieden, daß die Schaltfrequenz des Sperrwandlernetzteils in der Einschaltphase in den Hörbereich kommt.

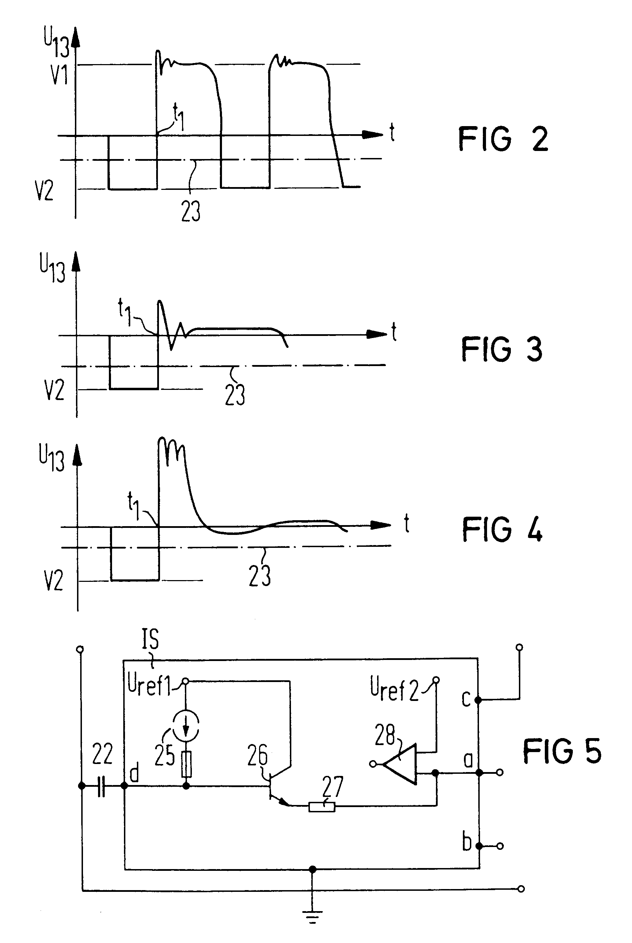

Im Nennbetrieb hat die Regelwicklungsspannung (U₁₃) den in FIG 2 dargestellten Verlauf. Zum Zeitpunkt t₁ beginnt die Sperrphase, d.h. die in der Flußphase negative Spannung wird positiv, klingelt dann aufgrund der unvermeidlichen parasitären Elemente im Transformator eine Zeitlang nach, stabilisiert sich anschließend auf einem von der Ausgangsspannung abhängigen Niveau V₁ und fällt schließlich auf einen Wert V₂ unter Null, wenn die Energie aus dem Transformator vollständig abgeflossen ist. Ist der Ausgang kurzgeschlossen, so erreicht U₁₃ in der Sperrphase nur einen relativ kleinen positiven Wert, mit dem Ergebnis, daß die Spannungsschwingungen zu Beginn der Sperrphase zu Vorzeichenwechseln führen können, wie dies in FIG 3 dargestellt ist. Unerwünschte Nulldurchgänge können auch dann auftreten, wenn im Betrieb des Schaltnetzteils ausgangsseitig plötzlich ein Kurzschluß auftritt und der kurzgeschlossene Kreis induktive und kapazitive Anteile hat (FIG 4).

Damit nun nur diejenigen Nulldurchgänge, die durch eine vollständige Entmagnetisierung des Transformators hervorgerufen werden, das Einschalten des Transistors 7 auslösen, ist die Schaltschwelle abgesenkt, und zwar auf einen in den FIG 2 bis 4 durch die strichpunktierte Gerade 23 repräsentierten Wert. Schaltungstechnisch wird diese Schaltschwellenverschiebung dadurch erreicht, daß die das Ruckkopplungssignal führende Leitung mit der Regelspannungsleitung, und zwar am Ort des Glättungskondensators 17, über einen Widerstand 24 verbunden ist. Diese Maßnahme bewirkt, daß dem Rückkopplungssignal eine zur Regelspannung, d.h. zur Ausgangsspannung, proportionale Korrekturspannung addiert wird. Der Nulldurchgangsdetektor im Ansteuerbaustein erhält also eine Summenspannung, die dann durch Null geht, d.h. den Einschaltimpuls für den Transistor 7 freigibt, wenn die Rückkopplungsspannung auf einen negativen, die positive Korrektorspannung gerade kompensierenden Wert gefallen ist.

FIG 5 zeigt einen Weg, die Korrekturspannung lastunabhängig zu erzeugen. Wie bereits erwähnt, liegt am Kondensator 22 nach Inbetriebnahme des Schaltnetzteils eine Rampenspannung an, die dadurch aufgebaut wird, daß der Kondensator von einer Referenzspannungsquelle U_{ref1} über eine Stromquelle 25 aufgeladen wird. Führt man nun die Rampenspannung an die Basis eines als Emitterfolger geschalteten Transistors 26, dessen Kollektor-Emitter-Strecke einerseits mit der Referenzspannungsquelle U_{ref1} und andererseits über einen Widerstand 27 mit dem Signaleingang des - im vorliegenden Fall durch einen Differenzverstärker 28 gebildeten - Nulldurchgangsdetektors verbunden ist, so wird dem Rückkopplungssignal eine Korrekturspannung überlagert. Diese Korrekturspannung ist nach Inbetriebnahme des Schaltnetzteils solange Null, bis die an der Basis anliegende, allmählich zunehmende Rampenspannung den Transistor leitend macht, wird dann positiv und erreicht mit Sättigung des Transistors einen konstanten Wert. Der Nulldetektor reagiert dann, wenn die an seinem einen Eingang liegende Summenspannung negativer wird als die auf den anderen Detektoreingang gegebene Referenzspannung U_{ref2}, die bei Null liegt ( + 30 mV). Da die Korrekturspannung lastunabhängig ist, muß man die Schaltmittel so auslegen, daß die Korrekturspannung nicht zu früh positiv wird und nicht zu positive Werte annimmt. Anderenfalls würde das Schaltnetzteil nicht anschwingen.

Die Erfindung beschränkt sich nicht nur auf die dargestellten Ausführungsbeispiele. So könnte das Schaltnetzteil auch so ausgeführt sein, daß es etwa im Nennbetrieb festfrequent arbeitet. Darüberhinaus ließe sich die Schwellwertverschiebung auch anders als durch Beaufschlagung eines Nulldurchgangsdetektors mit einem entsprechend korrigierten Rückkopplungssignal realisieren; so wäre es denkbar, anstelle des Eingangssignals auch die Ansprechschwelle des Detektors zu modifizieren. Im übrigen sei noch einmal klargestellt, daß mit dem Begriff "Nulldurchgangsdetektor" im vorliegenden Zusammenhang Detektoren gemeint sind, deren Ansprechschwellen zwischen 0 und einem sehr kleinen Wert U_{AS} der ersten Polarität liegt, wobei regelmäßig U_{AS}< 1/40 U₁₃ gilt.

## Patentansprüche

1. Schaltungsanordnung für ein Sperrwandler-Schaltnetzteil, mit folgenden Merkmalen:
1) das Schaltnetzteil enthält
a) einen magnetisierbaren Transformator (9), der eine im Kreis einer Gleichspannungsquelle (5, 6) in Reihe mit einem elektrischen Schalter (7) liegende Primärwicklung (8) und eine über eine Gleichrichtereinrichtung (11, 12) mit einer Last verbundene Sekundärwicklung (10) enthält;
b) im Betrieb des Schaltnetzteils wird der Transformator (9) in einer ersten Phase (Flußphase), in der der Schalter (7) eingeschaltet ist, aufmagnetisiert und in einer zweiten Phase (Sperrphase), in der der Schalter (7) ausgeschaltet ist, abmagnetisiert;
2) die Schaltungsanordnung enthält
a) eine Entmagnetisierungs-Überwachungseinrichtung mit einem Nulldurchgangsdetektor (28), die von einer Transformatorwicklung (13) eine Spannung (Rückkopplungsspannung) abnimmt und das Einschalten des ausgeschalteten Schalters (7) erst dann zuläßt, wenn die Rückkopplungsspannung während der Sperrphase von Werten mit einer ersten Polarität auf einen bestimmten Schwellwert abgefallen ist,
**dadurch gekennzeichnet,** daß
2)
b) die Entmagnetisierungs-Überwachungseinrichtung Schaltmittel enthält, die dem Schwellwert (23) einen zeitabhängigen Verlauf geben, wobei
c) der Schwellwert (23) nach Inbetriebnahme des Schaltnetzteils zunächst vom Wert Null oder von einem Wert der ersten Polarität ausgeht und dann zu Werten mit einer zweiten Polarität verschoben wird, mit der Maßgabe, daß die Verschiebung nicht vor dem Zeitpunkt einsetzt, zu dem unter Nennlast die an der Last abfallende Spannung (Lastspannung) anzusteigen beginnt.

2. Schaltungsanordnung nach Anspruch 1,
**dadurch gekennzeichnet,** daß die Verschiebung des Schwellwertes (23) proportional zur Lastspannung erfolgt.

3. Schaltungsanordnung nach Anspruch 1,
**dadurch gekennzeichnet,** daß die Verschiebung des Schwellwertes (23) erst dann einsetzt, wenn die Lastspannung ihren Nennwert erreicht hat.

4. Schaltungsanordnung nach Anspruch 1,
**dadurch gekennzeichnet,** daß der Nulldurchgangsdetektor (28) eine aus der Rückkopplungsspannung und einer zeitabhängigen Korrekturspannung gebildete Summenspannung empfängt, wobei die Korrekturspannung einen bei umgekehrten Vorzeichen proportionalen Verlauf wie der Schwellwert hat.

5. Schaltungsanordnung nach Anspruch 4, bei der der Transformator des Sperrwandler-Schaltnetzteils eine weitere Wicklung (Regelwicklung) enthält, aus der neben der Rückkopplungsspannung eine weitere, der Lastspannung proportionale Spannung (Regelspannung) abgeleitet wird,
**dadurch gekennzeichnet,**
daß die Korrekturspannung aus der Regelspannung gewonnen wird.

6. Schaltungsanordnung nach Anspruch 5,
**dadurch gekennzeichnet,** daß zur Gewinnung der Korrekturspannung aus der Regelspannung zwischen der die Regelspannung führenden Leitung und dem Eingang des Nulldurchgangsdetektors (28) ein ohmscher Widerstand (24) eingefügt ist.

7. Schaltungsanordnung nach Anspruch 4, bei der nach Inbetriebnahme des Schaltnetzteils eine Rampenspannung aufgebaut wird,
**dadurch gekennzeichnet,** daß die Korrekturspannung aus der Rampenspannung gewonnen wird.

8. Schaltungsanordnung nach Anspruch 7,
**dadurch gekennzeichnet,** daß dann, wenn die Rampenspannung nach Inbetriebnahme des Schaltnetzteils sogleich aufgebaut wird, die Korrekturspannung mit einer zeitlichen Verzögerung

## Claims

1. Circuit configuration of a flyback converter switched-mode power supply, having the following features:
1) the switched-mode power supply contains
a) a magnetisable transformer (9) which contains a primary winding (8), situated in the circuit of a DC voltage source (5, 6) in series with an electric switch (7), and a secondary winding (10) connected to a load via a rectifier device (11, 12);
b) during operation of the switched-mode power supply, the transformer (9) is magnetized in a first phase (flowing phase) in which the switch (7) is turned on, and is demagnetized in a second phase (blocking phase), in which the switch (7) is turned off;
2) the circuit configuration contains
a) a demagnetisation monitoring device having a zero-crossing detector (28), which taps a voltage (feedback voltage) from a transformer winding (13) and does not permit the turned-off switch (7) to be turned on until the feedback voltage has dropped to a specific threshold value during the blocked phase from values of a first polarity,
characterized in that
2)
b) the demagnetisation monitoring device contains switching means which give the threshold value (23) a time-dependent variation,
c) the threshold value (23) proceeding from a value of zero or from a value of the first polarity after start-up of the switched-mode power supply and then being shifted to values of a second polarity, provided that the shift does not begin before the instant at which at a rated load the voltage (load voltage) dropping at the load begins to rise.

2. Circuit configuration according to Claim 1, characterized in that the shift in the threshold value (23) is effected in proportion to the load voltage.

3. Circuit configuration according to Claim 1, characterized in that the shift in the threshold voltage (23) does not begin until the load voltage has reached its stated value.

4. Circuit configuration according to Claim 1, characterized in that the zero-crossing detector (28) receives a sum voltage formed from the feedback voltage and a time-dependent correction voltage, the correction voltage having a proportional variation similar to that of the threshold value inconjunction with the opposite signs.

5. Circuit configuration according to Claim 4, in which the transformer of the flyback converter switched-mode power supply contains a further winding (control winding) from which in addition to the feedback voltage a further voltage (control voltage) proportional to the load voltage is derived, characterized in that the correction voltage is obtained from the control voltage.

6. Circuit configuration according to Claim 5, characterized in that an ohmic resistor (24) is inserted between the line carrying the control voltage and the input of the zero-crossing detector (28) for the purpose of obtaining the correction voltage from the control voltage.

7. Circuit configuration according to Claim 4, in which a ramp voltage is built up after start-up of the switched-mode power supply, characterized in that the correction voltage is obtained from the ramp voltage.

8. Circuit configuration according to Claim 7, characterized in that the correction voltage rises with a time lag relative to the ramp voltage whenever the ramp voltage builds up immediately after start-up of the switched-mode power supply.

## Revendications

1. Montage pour un bloc d'alimentation commuté à convertisseur à oscillateur bloqué, comportant les particularités suivantes :
1) le bloc d'alimentation commuté comporte :
a) un transformateur (9) magnétisable, qui comporte un enroulement primaire (8) présent dans le circuit d'une source de tension continue (5, 6) en série avec un interrupteur électrique (7), et un enroulement secondaire (10) relié à une charge, par l'intermédiaire d'un dispositif redresseur (11, 12);
b) au cours du fonctionnement du bloc d'alimentation commuté, le transformateur (9) est magnétisé dans une première phase (phase passante), au cours de laquelle l'interrupteur (7) est fermé, et est démagnétisé dans une deuxième phase (phase bloquée), au cours de laquelle l'interrupteur (7) est ouvert;
2) le montage comporte
a) un dispositif de démagnétisation et de contrôle comportant un détecteur (28) de passage par zéro, qui fournit, par un enroulement (13) de transformateur, une tension (tension de recouplage), et qui autorise la fermeture de l'interrupteur (7) ouvert uniquement lorsque la tension de recouplage a chuté, pendant la phase de blocage, de valeurs ayant une première polarité à une valeur seuil déterminée,
caractérisé par le fait que
2)
b) le dispositif de démagnétisation et de contrôle comporte des moyens de commutation, qui donnent à la valeur seuil (23) une courbe dépendant du temps, du type dans lequel
c) la valeur seuil (23) est obtenue, lors de la mise en service du bloc d'alimentation commuté, en premier lieu à partir de la valeur nulle ou d'une valeur de première polarité et est alors décalée aux valeurs ayant une deuxième polarité, en tenant compte du fait que le décalage n'est pas effectué avant l'instant où la tension (tension de charge), qui chute aux bornes de la charge, commence à augmenter, sous charge nominale.

2. Montage suivant la revendication 1,
caractérisé en ce que le décalage de la valeur seuil (23) est proportionnel à la tension de charge.

3. Montage suivant la revendication 1,
caractérisé en ce que le décalage de la valeur seuil (23) est effectué uniquement lorsque la tension de charge a atteint sa valeur nominale.

4. Montage suivant la revendication 1,
caractérisé en ce que le détecteur (28) de passage par zéro reçoit une tension de somme formée à partir de la tension de recouplage et d'une tension de correction dépendante du temps, la tension de correction ayant une allure proportionnelle, pour des caractéristiques inverses, à celle de la valeur seuil.

5. Montage suivant la revendication 4, dans lequel le transformateur du bloc d'alimentation commuté à convertisseur à oscillateur bloqué comporte un autre enroulement (enroulement de réglage), à partir duquel est dérivée, en plus de la tension de recouplage, une autre tension (tension de réglage) proportionnelle à la tension de charge,
caractérisé en ce que la tension de correction est obtenue à partir de la tension de réglage.

6. Montage suivant la revendication 5,
caractérisé en ce que, pour obtenir la tension de correction à partir de la tension de réglage, une résistance ohmique (24) est introduite entre la ligne à la tension de réglage et l'entrée du détecteur (28) de passage par zéro.

7. Montage suivant la revendication 4, dans lequel une tension de rampe est formée après la mise en service du bloc d'alimentation commuté,
caractérisé en ce que la tension de correction est obtenue à partir de la tension de rampe.

8. Montage suivant la revendication 7, caractérisé en ce que, si la tension de rampe est établie immédiatement après la mise en fonctionnement du bloc d'alimentation commuté, la tension de correction l'est avec un retard temporel.
